# EUROPEAN PATENT SPECIFICATION

(11) **EP 3 459 652 B1**
(45) Date of publication and mention of the grant of the patent: **06.05.2020**
(21) Application number: 17382629.8
(22) Date of filing: 21.09.2017
(51) Int. Cl.: B22D 11/126, B23D 79/00, B23K 37/08, B23K 7/06, B23K 7/10

(54) **STEEL BILLET DEBURRING MACHINE**
STAHLKNÜPPELENTGRATUNGSMASCHINE
MACHINE D'ÉBAVURAGE DE BILLETTES D'ACIER

(43) Date of publication of application: 27.03.2019
(73) Proprietor: Sarralle Equipos Siderurgicos, S.L., 20730 Azpetia (Gipuzkoa) (ES)
(72) Inventor: ROS, Carlos, 20730 Azpeitia (Gipuzkoa) (ES); SESMA, Xabier, 20730 Azpeitia (Gipuzkoa) (ES)
(74) Representative: Pons

(56) References cited:
- EP-A1- 0 943 381
- EP-A2- 0 947 264
- EP-B1- 1 172 159
- JP-A- H04 270 044
- US-A1- 2006 283 294
- SERENO G ET AL: "EBAVURAGE DES BRAMES: CONTROLE QUALITE PAR VIDEO, CONTROLE DU FONCTIONNEMENT PAR ANALYSE DES SIGNAUX", REVUE DE METALLURGIE - CAHIERS D'INFORMATIONS TECHNIQUES, REVUE DE METALLURGIE. PARIS, FR, vol. 95, no. 6, 1 June 1998 (1998-06-01), pages 777-783, XP000768790, ISSN: 0035-1563

## Description

### OBJECT OF THE INVENTION

The present invention falls within the technical field of machines for deburring or finishing edges, and refers in particular to a deburring machine intended to eliminate the burrs and similar imperfections of a steel billet, produced during the oxycutting stage and prior to cooling of a billet generated by means of the continuous cast steel process.

### BACKGROUND OF THE INVENTION

Continuous cast iron and steel installations for billets generally have an oxycutting device that is used to cut the billets that leave the casting line into sections intended for the re-rolling of iron and steel products (round, profiled, wires, etc.).

Conventionally, oxycutting devices use a carriage that can be moved horizontally on associated rails that remain on top of the billet to be cut. In the lower part of the carriage there is a gripper for grasping the moving billet and, in front of the carriage there is a torch holder with its torch, suitable for carrying out a pendular movement in a vertical plane thanks to associated means of actuation.

The mobile carriage is motorized and said motorization is disengaged upon actuating the gripper, such that the carriage is then actuated directly by the moving billet. Then the pendulum torch is activated and cuts by means of oxycutting, such that the cutting jet of oxygen attacks the billet on both sides of the vertical, on the upper side thereof.

Thus, during the translation movement of the carriage, identical to that of the billet while cut-off takes place, cutting of the billet is carried out by means of the pendulum movement of the oxycutting torch in a vertical plane.

Once the cut has been carried out, the carriage moves backwards again, and then the gripper is actuated again to grasp the billet from the upper side in order to proceed to a new cut thereof.

Oxycutting generates a series of imperfections, known generally as burrs, which protrude irregularly from the edges and which must be removed in order to avoid additional damage and wear on the equipment corresponding to later stages of the iron and steelmaking process, such as, for example, in the rolling equipment.

Various automatic deburring machines are known in the current state of the art for removing said burrs by means of friction.
a) Machines based on a rotating mechanism (roller) that can work indistinctly on the head and the tail of the billet. These machines have components that are continuously subjected to strong shocks and vibrations, such as bearings or gearwheels, thereby causing malfunction thereof due to fatigue.
b) Machines that use the energy of the billet itself to be able to remove the burr. These solutions consist of different types of blades that can be put in a working position by means of some type of mechanism. In these solutions, the energy for removing the burr is generated by the cast billet itself through the transport movement provided by the transport rollers. These solutions are generally not very functional because they require precision in their working position, which is difficult to achieve, and in addition they are only efficient on one side of the billet (head).
c) Machines based on the oxycutting machine itself, which is fitted with a very high-pressure oxygen injector, striking on the burr and cutting it. This is well-functioning equipment but it requires a high consumption of oxygen/gas, which makes it very expensive.

The steel billet deburring machines of the present invention is comprised in group a), i.e., in machines based on a rotating mechanism or roller that can work indistinctly on the head and the tail of the steel billet.

EP1172159B1 and EP0943381A1 disclose a steel billet deburring machine according to the preamble of claim 1.

### DESCRIPTION OF THE INVENTION

The object of the invention consists of a steel billet deburring machine, intended to be incorporated into a continuous cast iron and steel installation, in an arrangement immediately after the oxycutting station, for removing by impact the burrs produced on the head and the tail of a steel billet at high temperature. In a preferred embodiment, said deburring machine is interposed in a path of rollers defined in the installation, which conveys the billets from the oxycutting station to a transfer area.

The deburring machine comprises a frame on which a rotating roller is mounted, which comprises an outer surface wherein a plurality of impact tools are arranged, preferably made of tungsten carbide, configured to impact on the head and/or the tail of the steel billet.

Preferably, the rotating roller comprises a plurality of cavities, preferably wedge-shaped cavities, for housing the plurality of impact tools, such that the fastening of the impact tools is extremely rigid and effective for withstanding the impacts and vibrations without being loosened from the rotating roller.

Optionally, the deburring machine further comprises at least one tilting side arm linked to the rotating roller for tilting said rotating roller and bringing it closer to and/or moving it away from the steel billet.

Preferably, the deburring machine further comprises hydraulic turbines that transmit a rotating movement to the roller. This way, the actuation of the rotating roller is carried out by means of compact elements, wherein the only elements subjected to movement are made of Teflon, so that they are not very sensitive to impacts, and wherein, since the turbines are actuated hydraulically, it is possible to feed them by means of water from the installation, removing the electrically or electronically actuated elements that are difficult to maintain in a high temperature environment, dirt and water in many cases.

The deburring machine further comprises a pneumatic cylinder linked to at least one tilting side arm, which transmits the tilting movement to said rotating roller, bringing it closer to and/or moving it away from the steel billet depending on the commands of an external controller, which in turn receives information from a detector, preferably an optical-type detector, which determines the relative position of the steel billet with respect to the rotating roller.

The pneumatic cylinder, in addition to providing the lifting and lowering movement of the at least one tilting side arm and the rotating roller, acts as a shock absorber for the impacts to which the deburring machine is subjected when the impact tools strike the steel billets.

Thus, when the detector determines that a steel billet is approaching, the pneumatic cylinder causes the at least one tilting side arm and the rotating roller linked to the pneumatic cylinder to tilt and ascend, so that the impact tools can impact on the head of the steel billet. Since the steel billet continues to move longitudinally along the roller path of the installation, once the head of the steel billet exceeds the rotating roller, the external controller causes the tilting side arms to tilt and descend, so that the impact tools do not impact on the central body of the steel billet.

Upon determining that the tail of the steel billet is approaching the rotating roller, the external controller sends a new signal for the tilting side arms to tilt and ascend, thereby allowing the impact tools to remove the burrs.

Among the various advantages of the deburring machine described above, it should be highlighted that it lacks the elements most commonly damaged in equipment which, like this equipment, is continuously subjected to strong impacts and vibrations, such as, for example, bearings or gearwheels. It is also foreseen that the mobile elements, those that are in direct contact with elements in motion, be manufactured in Teflon with a low friction coefficient, suitable for working in harsh environments, with a capacity to withstand high pressure values and alternative loads.

### DESCRIPTION OF THE DRAWINGS

As a complement to the description provided herein and for the purpose of helping to make the characteristics of the invention more readily understandable, in accordance with an exemplary preferred embodiment thereof, said description is accompanied by a set of figures constituting an integral part thereof, which by way of illustration and not limitation represent the following:
Figure 1 shows a perspective view of the deburring machine in which its main constituent elements can be seen.
Figure 2 shows a front view of a transverse cross section of the deburring machine.
Figure 3 shows a right side view of a transverse cross section of the deburring machine.
Figure 4 shows a perspective view of the frame of the deburring machine.
Figure 5 shows a rear perspective view of the one of the tilting side arms of the deburring machine.
Figure 6 shows a perspective view of the roller with the cutting elements.
Figure 7 shows a view of the deburring machine in working position.
Figure 8 shows a view of the deburring machine in resting position.

### PREFERRED EMBODIMENT OF THE INVENTION

What follows is a detailed description, with the help of the figures referenced above, of an exemplary preferred embodiment of the object of the present invention.

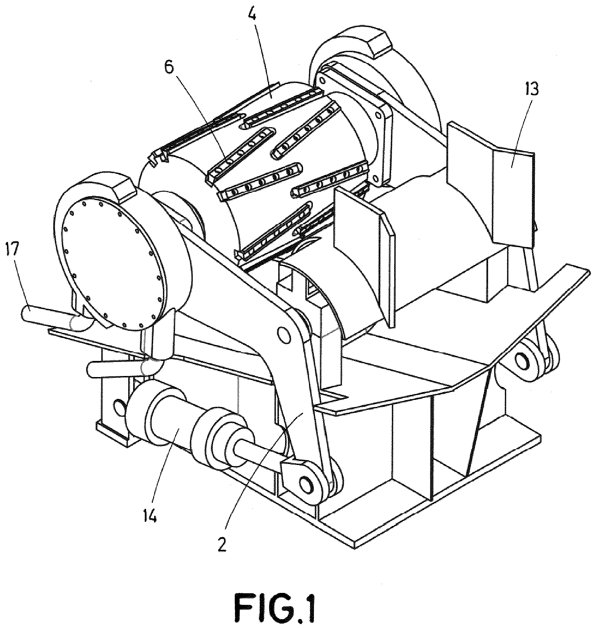

The described steel billet deburring machine, shown schematically in Figure 1, is intended to be incorporated into a continuous cast iron and steel installation, in an arrangement immediately after the oxycutting station, for removing by impact the burrs produced on the head and the tail of a steel billet at high temperature. In a preferred embodiment, said deburring machine is interposed in a path of rollers defined in the installation, which conveys the billets from the oxycutting station to a transfer area.

In order to do this, the deburring machine is made up of a frame (1) configured to be fastened to a frame (not shown) of the roller path of the installation on which at least two tilting side arms (2) are mounted, linked at one end to a rotating shaft (3), transverse to a longitudinal direction of the steel billets (8), to which in turn a rotating roller (4) is integrally and coaxially linked, having an outer surface in which a plurality of wedge-shaped cavities (5) and a plurality of impact tools (6), located in said cavities (5), are defined and which are those that impact on the head (7) and the tail of a steel billet (8) melted at high temperature for removing burrs.

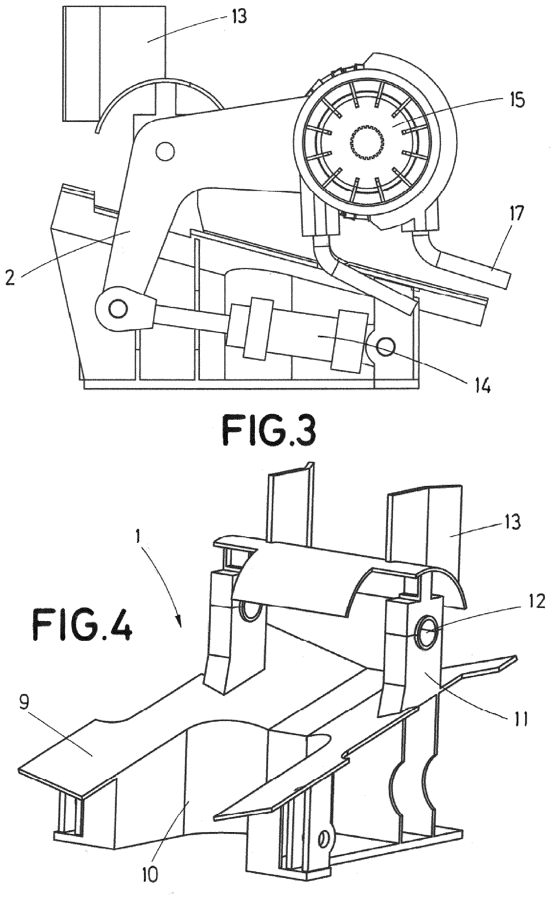

The frame (1), shown in Figure 4, comprises an inclined central ramp (9), in which an extraction channel (10) is defined for evacuating the loosened burrs, and at least two support columns (11) facing each other and located on two opposite sides of the ramp (9), in which respective holes (12) are defined for housing the rotating shaft (3).

The deburring machine further comprises guides (13), mounted on an upper end of the support columns (11), which limit the transverse movement of the molten steel billet (8) and pneumatic cylinders (14), linked to the other end of each of the tilting side arms (2), are located on the respective sides of the ramp (9) to cause tilting of said tilting side arms (2). It is also provided that said pneumatic cylinders (14) will be capable of absorbing part of the energy generated by the impact during the deburring process.

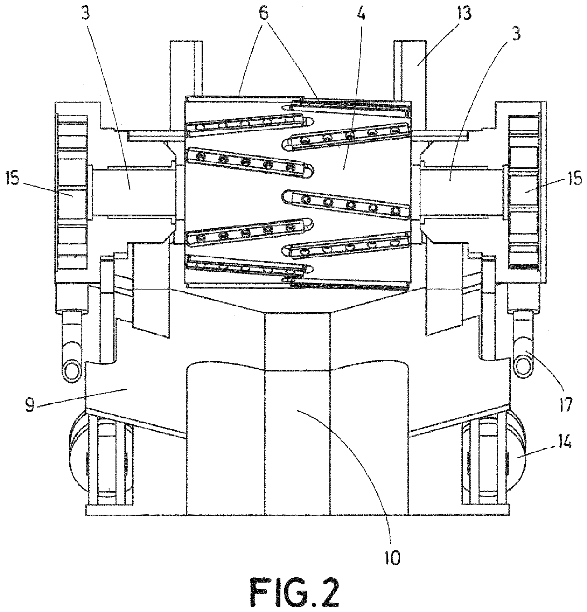

The deburring machine further comprises hydraulic turbines (15), mounted on the ends of the rotating shaft (3) that actuate both the rotating shaft (3) and the rotating roller (4), said elements being integrally linked to each other, as shown in Figures 2 and 3.

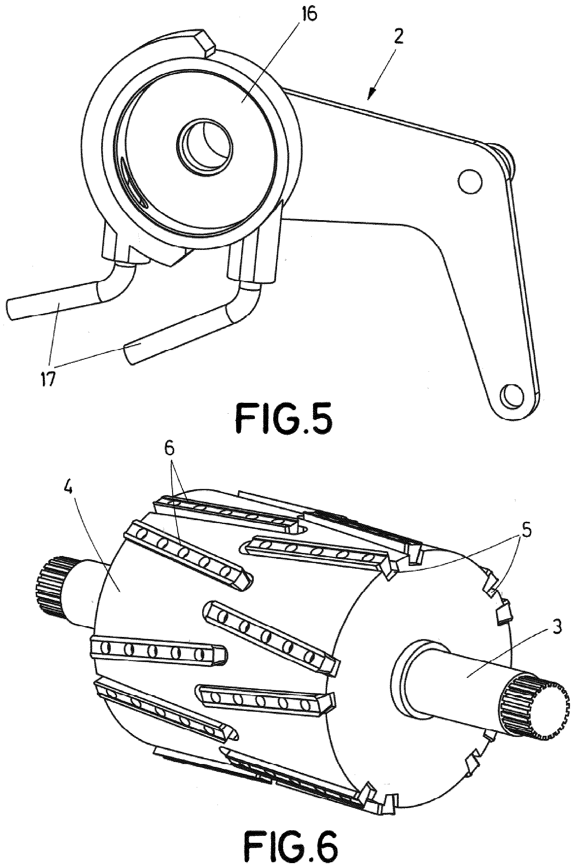

On the other hand, each of the tilting side arms (2), shown in Figure 5, comprises an impeller (16), at the end by which it is linked to the shaft (3), for housing the hydraulic turbine (15) as well as the ducts (17) connected to the impeller (16) through which a fluid flows for actuating said hydraulic turbine (15).

The rotating roller (4) is linked coaxially and integrally to the shaft (3) through keys (not shown in the attached figures). The wedge-shaped cavities (5), into which the impact tools (6) are introduced, are evenly distributed over the entire surface of the rotating roller (4). In the preferred embodiment shown herein, said cavities (5) are arranged obliquely to a central plane, which transversely cuts the rotating roller (4), and the impact tools (6) are tungsten carbide tools which, when the rotating roller (4) rotates, strike the head (7) and the tail of the steel billet (8) in order to exert an impact which loosens the existing burrs, which fall onto the extraction channel (10) for evacuation.

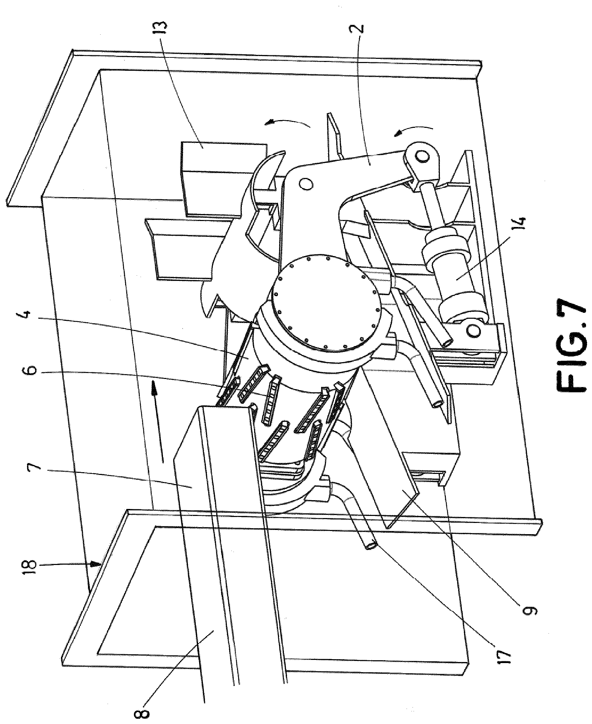

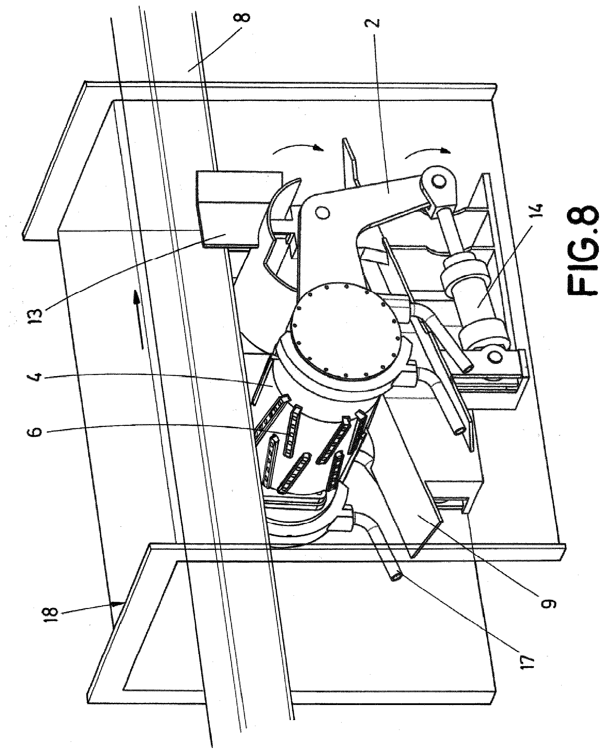

Figures 7 and 8 show two working positions of the deburring machine. As can be seen, a cover (18) consisting of side walls and a lid covers the deburring machine externally in order to protect the environment and intercept possible ejections of loosened burrs towards the exterior of the deburring machine. In addition, a detector, which is preferably an optical-type detector, determines when the head (7) of a steel billet (8) is approaching the deburring machine in order to send a signal to an external controller in charge of governing the operation of the entire device.

The rotating shaft (3) and the rotating roller (4) integrally linked thereto, rotate continuously, actuated by the hydraulic turbines (15). When the detector determines that the head (7) of a steel billet (8) approaches the rotating roller (4) of the deburring machine through the roller path of the installation, from the oxycutting station, it sends a signal to the external controller, which actuates the pneumatic cylinders (14) in order to tilt the tilting side arms (2) that ascend, such that the rotating roller (4) is interposed in the path of the steel billet (8), as shown in Figure 7, so that the impact tools (6) strike the head (7) of said steel billet (8) causing an impact because of the rotation of the rotating roller (4), which causes the burrs to loosen and fall onto the ramp (9) of the frame (1), for evacuation through the extraction channel (10).

After a predetermined period of time, which is preferably 3 seconds, the external controller sends a new signal to the pneumatic cylinders (14) for newly tilting the tilting side arms (2) which, as shown in Figure 8, descend and position the rotating roller (4) so that the impact tools (6) stop striking the steel billet (8).

When the controller detects the approach of the tail of the steel billet (8) it again actuates the pneumatic cylinders (14), which lift the tilting side arms (2) so that the impact tools (6) remove the burrs of the tail of the steel billet (8).

## Claims

1. A steel billet deburring machine, intended to be incorporated into a continuous cast iron and steel installation, in an arrangement immediately after an oxycutting station, for removing by impact the burrs produced on the head (7) and/or the tail of a steel billet (8), wherein the deburring machine comprises:
• a frame (1) on which a rotating roller (4) is mounted;
• a plurality of impact tools (6) arranged on an outer surface of the rotating roller (4) and configured to impact on the head (7) and/or the tail of the steel billet (8);
**characterized in that** the steel billet deburring machine further comprises:
• at least one tilting side arm (2) linked to the rotating roller (4) for tilting said rotating roller (4) and bringing it closer to and/or moving it away from the steel billet (8); and
• a pneumatic cylinder (14) linked to the at least one tilting side arm (2), which transmits the tilting movement to said rotating roller (4);
wherein said pneumatic cylinder (14) is configured to absorb part of the energy generated by the impact during the deburring process.

2. The steel billet deburring machine according to claim 1, **characterized in that** the rotating roller (4) comprises a plurality of wedge-shaped cavities (5) configured for housing the plurality of impact tools (6).

3. The steel billet deburring machine according to any of the preceding claims, **characterized in that** it further comprises at least one hydraulic turbine (15) that transmits a rotating movement to the rotating roller (4).

4. The steel billet deburring machine according to claim 1, **characterized in that** the frame (1) comprises an inclined central ramp (9), in which an extraction channel (10) is defined for evacuating the loosened burrs, and at least two support columns (11) facing each other and located on two opposite sides of the ramp (9), in which respective holes (12) are defined for housing the rotating shaft (3) linked to the rotating roller (4).

5. The steel billet deburring machine according to claims 1 and 4, **characterized in that** the hydraulic turbine (15) is mounted on the ends of the rotating shaft (3) and actuates both the rotating shaft (3) and the rotating roller (4).

6. The steel billet deburring machine according to claim 5, **characterized in that** it further comprises guides (13), mounted on an upper end of the support columns (11), which limit the transverse movement of the steel billet (8).

7. The steel billet deburring machine according to claim 5, **characterized in that** the at least one tilting side arm (2) comprises an impeller (16), at the end by which it is linked to the rotating shaft (3), for housing the hydraulic turbine (15), as well as ducts (17) connected to the impeller (16) through which a fluid flows for actuating said hydraulic turbine (15).

8. The steel billet deburring machine according to claim 2, **characterized in that** the wedge-shaped cavities (5) are arranged obliquely to a central plane, which transversally cuts the rotating roller (4).

9. The steel billet deburring machine according to any of the preceding claims, **characterized in that** it comprises a detector configured to determine when the head (7) and/or the tail of a steel billet (8) is approaching the deburring machine.

10. The steel billet deburring machine according claim 9, **characterized in that** the detector configured to determine when the head (7) and/or the tail of a steel billet (8) is approaching the deburring machine is an optical-type detector.

11. The steel billet deburring machine according to any of claims 9 or 10, **characterized in that** it comprises a controller, which receives the signal from the detector, configured for governing the operation of the deburring machine.

12. The steel billet deburring machine according to any of the preceding claims, **characterized in that** the impact tools (6) are made of tungsten carbide.

## Patentansprüche

1. Eine Stahlknüppelentgratungsmaschine, dazu bestimmt, um in eine Stranggusseisen- und -stahlinstallation integriert zu werden, in einer Anordnung unmittelbar nach einer Brennschneidestation, zur Entfernung durch Stöße von Graten, die sich am Kopf (7) und/oder am Ende eines Stahlknüppels (8) gebildet haben, wobei die Entgratungsmaschine Folgendes umfasst:
• ein Rahmen (1), auf dem eine rotierende Walze (4) montiert ist;
• eine Vielzahl von Stoßwerkzeugen (6), die an der Außenfläche der rotierenden Walze (4) angeordnet und so konfiguriert sind, um Stöße auf den Kopf (7) und/oder auf das Ende des Stahlknüppels (8) auszuüben;
**dadurch gekennzeichnet, dass** die Stahlknüppelentgratungsmaschine ferner Folgendes umfasst:
• mindestens ein seitlicher Kipparm (2), der mit der rotierenden Walze (4) verbunden ist, um die genannte rotierende Walze (4) zu kippen und sie näher an den Stahlknüppel (8) zu bringen bzw. um sie weiter davon weg zu bewegen; und
• ein Pneumatikzylinder (14), der mit dem mindestens einen seitlichen Kipparm (2) verbunden ist, welcher die Kippbewegung auf die genannte rotierende Walze (4) überträgt;
wobei der genannte Pneumatikzylinder (14) konfiguriert ist, um einen Teil der Energie zu absorbieren, die von dem Stoß während des Entgratungsverfahrens erzeugt wird.

2. Die Stahlknüppelentgratungsmaschine nach Anspruch 1, **dadurch gekennzeichnet, dass** die rotierende Walze (4) eine Vielzahl von keilförmigen Vertiefungen (5) umfasst, die dazu konfiguriert sind, eine Vielzahl von Stroßwerkzeugen (6) aufzunehmen.

3. Die Stahlknüppelentgratungsmaschine, nach einem der vorhergehenden Ansprüche, **dadurch gekennzeichnet, dass** sie ferner mindestens eine Hydraulikturbine (15) umfasst, die eine Drehbewegung auf die rotierende Walze (4) überträgt.

4. Die Stahlknüppelentgratungsmaschine nach Anspruch 1, **dadurch gekennzeichnet, dass** der Rahmen (1) eine schräge mittige Rampe (9) umfasst, in der ein Extraktionskanal (10) zum Abtransport der gelösten Grate definiert ist, und mindestens zwei Stützträger (11), die sich gegenüberliegen und die sich auf zwei gegenüberliegenden Seiten der Rampe (9) befinden, in denen entsprechende Löcher (12) definiert sind, zur Unterbringung des rotierenden Schafts (3), der mit der rotierenden Walze (4) verbunden ist.

5. Die Stahlknüppelentgratungsmaschine nach den Ansprüchen 1 und 4, **dadurch gekennzeichnet, dass** die Hydraulikturbine (15) an den Enden des rotierenden Schafts (3) montiert ist und sowohl den rotierenden Schaft (3) als auch die rotierende Walze (4) antreibt.

6. Die Stahlknüppelentgratungsmaschine nach Anspruch 5, **dadurch gekennzeichnet, dass** sie ferner Führungen (13) umfasst, die am oberen Ende der Stützträger (11) montiert sind, welche die Querbewegung des Stahlknüppels (8) begrenzt.

7. Die Stahlknüppelentgratungsmaschine nach Anspruch 5, **dadurch gekennzeichnet, dass** der mindestens eine seitliche Kipparm (2) einen Impeller (16) umfasst, am Ende, mit dem er mit dem rotierenden Schaft (3) verbunden ist, zur Unterbringung der Hydraulikturbine (15), sowie Kanäle (17), die mit dem Impeller (16) verbunden sind, durch die eine Flüssigkeit fließt, um die Hydraulikturbine (15) anzutreiben.

8. Die Stahlknüppelentgratungsmaschine nach Anspruch 2, **dadurch gekennzeichnet, dass** die keilförmigen Vertiefungen (5) quer zu einer mittigen Ebene angeordnet sind, welche die rotierende Walze (4) transversal durchschneidet.

9. Die Stahlknüppelentgratungsmaschine nach einem der vorhergehenden Ansprüche, **dadurch gekennzeichnet, dass** sie einen Detektor umfasst, der konfiguriert ist, um zu bestimmen, wann sich der Kopf (7) und/oder das Ende eines Stahlknüppels (8) der Entgratungsmaschine nähert.

10. Die Stahlknüppelentgratungsmaschine nach Anspruch 9, **dadurch gekennzeichnet, dass** der Detektor, der konfiguriert ist, um zu bestimmen, wann sich der Kopf (7) und/oder das Ende eines Stahlknüppels (8) der Entgratungsmaschine nähert, ein Detektor optischer Art ist.

11. Die Stahlknüppelentgratungsmaschine nach einem der Ansprüche 9 oder 10, **dadurch gekennzeichnet, dass** sie eine Steuerung umfasst, die das Signal von dem Detektor empfängt, konfiguriert zur Steuerung des Betriebs der Entgratungsmaschine.

12. Die Stahlknüppelentgratungsmaschine nach einem der vorhergehenden Ansprüche, **dadurch gekennzeichnet, dass** die Stroßwerkzeuge (6) aus Wolframcarbid bestehen.

## Revendications

1. Machine d'ébavurage de billettes d'acier, destinée à être intégrée dans une installation de coulée continue de fonte et d'acier, à un emplacement situé immédiatement après un poste d'oxycoupage, pour éliminer par percussion les bavures produites sur la tête (7) et/ou la queue d'une billette d'acier (8), dans laquelle la machine d'ébavurage comprend :
• un châssis (1) sur lequel est monté un rouleau rotatif (4) ;
• une pluralité d'outils de percussion (6) disposés sur une surface externe du rouleau rotatif (4) et configurés pour percuter la tête (7) et/ou la queue de la billette d'acier (8) ;
**caractérisée** parce que la machine d'ébavurage de billettes d'acier comprend en outre :
• au moins un bras basculant latéral (2) relié au rouleau rotatif (4) pour faire basculer ledit rouleau rotatif (4) et l'approcher et/ou l'éloigner de la billette d'acier (8) ; et
• un cylindre pneumatique (14) relié au au moins un bras basculant latéral (2), qui transmet le mouvement de basculement audit rouleau rotatif (4) ;
dans laquelle ledit cylindre pneumatique (14) est configuré pour absorber une partie de l'énergie générée par la percussion durant la procédure d'ébavurage.

2. La machine d'ébavurage de billettes d'acier selon la revendication 1, **caractérisée** parce que le rouleau rotatif (4) comprend une pluralité de cavités en forme de coins (5) configurées pour héberger la pluralité d'outils de percussion (6).

3. La machine d'ébavurage de billettes d'acier selon l'une des revendications précédentes, **caractérisée** parce qu'elle comprend en outre au moins une turbine hydraulique (15) qui transmet un mouvement de rotation au rouleau rotatif (4).

4. La machine d'ébavurage de billettes d'acier selon la revendication 1, **caractérisée** parce que le châssis (1) comprend une rampe centrale inclinée (9), dans laquelle un canal d'extraction (10) est défini pour évacuer les bavures détachées, et au moins deux colonnes de support (11) se faisant face et situées sur deux côtés opposés de la rampe (9), dans lesquelles des trous respectifs (12) sont définis pour héberger l'axe de rotation (3) relié au rouleau rotatif (4).

5. La machine d'ébavurage de billettes d'acier selon les revendications 1 et 4, **caractérisée** parce que la turbine hydraulique (15) est montée sur les extrémités de l'axe de rotation (3) et actionne et l'axe de rotation (3) et le rouleau rotatif (4).

6. La machine d'ébavurage de billettes d'acier selon la revendication 5, **caractérisée** parce qu'elle comprend en outre des guides (13), montés sur une extrémité supérieure des colonnes de support (11), qui limitent le mouvement transversal de la billette d'acier (8).

7. La machine d'ébavurage de billettes d'acier selon la revendication 5, **caractérisée** parce que le au moins un bras basculant latéral (2) comprend un rotor (16), à l'extrémité par laquelle il est relié à l'axe de rotation (3), pour héberger la turbine hydraulique (15), ainsi que des conduits (17) raccordés au rotor (16) à travers lesquels coule un fluide pour actionner ladite turbine hydraulique (15).

8. La machine d'ébavurage de billettes d'acier selon la revendication 2, **caractérisée** parce que les cavités en forme de coins (5) sont disposées obliquement par rapport à un plan médian, qui coupe transversalement le rouleau rotatif (4).

9. La machine d'ébavurage de billettes d'acier selon l'une des revendications précédentes, **caractérisée** parce qu'elle comprend un détecteur configuré pour déterminer le moment où la tête (7) et/ou la queue d'une billette d'acier (8) approche de la machine d'ébavurage.

10. La machine d'ébavurage de billettes d'acier selon la revendication 9, **caractérisée** parce que le détecteur configuré pour déterminer le moment où la tête (7) et/ou la queue d'une billette d'acier (8) approche de la machine d'ébavurage est un détecteur de type optique.

11. La machine d'ébavurage de billettes d'acier selon l'une des revendications 9 ou 10, **caractérisée** parce qu'elle comprend un régulateur, qui reçoit le signal du détecteur, configuré pour régir le fonctionnement de la machine d'ébavurage.

12. La machine d'ébavurage de billettes d'acier selon l'une des revendications précédentes, **caractérisée** parce que les outils de percussion (6) sont fabriqués en carbure de tungstène.
